# EUROPÄISCHE PATENTSCHRIFT

(11) **EP 0 858 394 B1**
(45) Veröffentlichungstag und Bekanntmachung des Hinweises auf die Patenterteilung: **02.06.1999**
(21) Anmeldenummer: 96937267.1
(22) Anmeldetag: 28.10.1996
(51) Int. Cl.: B32B 27/08, B32B 27/20, B65B 9/00

(54) **PAPIERÄHNLICHE UND THERMOVERFORMBARE MEHRSCHICHTENBARRIEREFOLIEN**
PAPER-LIKE THERMOFORMABLE MULTILAYER BARRIER FILM
FEUILLES BARRIERES MULTICOUCHES EN PAPIER OU ANALOGUE THERMODEFORMABLES

(30) Priorität: 04.11.1995 EP 95117387
(43) Veröffentlichungstag der Anmeldung: 19.08.1998
(73) Patentinhaber: Tetra Laval Holdings & Finance SA, 1009 Pully (CH)
(72) Erfinder: REINERS, Ulrich, NL-5802 BC Venray (NL); JÄRUND, Erik, S-450 71 Fjällbacka (SE); LINNE, Leif, S-257 33 Rydebäck (SE)
(74) Vertreter: Kutzenberger, Helga, Dr.
(86) Internationale Anmeldenummer: EP9604681
(87) Internationale Veröffentlichungsnummer: WO9717198

(56) Entgegenhaltungen:
- EP-A- 0 613 832
- DE-A- 4 410 235
- US-A- 4 526 823
- US-A- 4 879 147
- US-A- 5 248 534
- US-A- 5 449 552

## Beschreibung

Die vorliegende Erfindung betrifft eine Mehrschichtenbarrierefolie mit sehr guten Thermoformeigenschaften insbesondere auf Form-, Füll- und Siegelmaschinen (FFS-Maschinen). Die Folie hat papierähnlichen Charakter.

In der Lebensmittelindustrie werden verderbliche Produkte wie beispielsweise Frischfleisch, Geflügel, Fisch, Käse und die daraus hergestellten Erzeugnisse in sogenannte Barrierefolien verpackt. Diese Lebensmittel werden entweder in einer definierten Gasatmosphäre (MAP-Packungen = **M**odified **A**tmosphere **P**ackaging) oder aber im Vakuum (Vakuumpackungen) verpackt. Bei der MAP-Packung wird die Umgebungsluft produktabhängig durch unterschiedliche Gasmischungen ersetzt. Typische Beispiele von Gaszusammensetzungen sind für Frischfleisch CO₂-O₂ - Mischungen und für Aufschnitt Gasmischungen aus CO₂ und N₂. Dementsprechend müssen Folien mit Barriereeigenschaften gegenüber den oben genannten Gasen als Verpackungsmaterial eingesetzt werden.
Die beispielhaft aufgezählten Produkte können auch vakuumverpackt werden. Bei diesem Verpackungsprozeß wird die Umgebungsluft der Verpackung nahezu vollständig entzogen. Als Packmittel werden Barrierefolien verwendet, die ein Eindringen von Sauerstoff aus der Umgebung in die Packung verhindern. Sowohl MAP- als auch Vakuumverpackungen werden zu einem hohen Anteil auf FFS-Maschinen hergestellt. Da die Packungsgeometrie in Abhänigkeit vom Füllgut erst unmittelbar vor dem Einfüllen des Produktes durch Thermoverformen erzeugt wird, zeichnen sich dieser Verpackungsprozeß durch eine hohe Flexibilität aus.

Es gibt eine Vielzahl von Folien insbesondere auch Barrierefolien für diese Anwendungen. Seit langem bekannt sind transparente Folien mit dem prinzipiellen Aufbau: Polyamid (PA)/Ethylenvinylalkohol (EVOH)/Polyethylen (PE) oder Polystyrol (PS)/ Ethylenvinylalkohol (EVOH)/Polyethylen (PE) oder Polyesterterephtalat (PET)/Polyvinylidenchlorid (PVDC)/ Polyethylen (PE).

Auch nicht transparente, weiße Folien für diese Verpackungszwecke sind bekannt. In EP 0161035 wird eine mit anorganischen Füllstoffen gefüllte 7-schichtige Folie mit einer Barriereschicht beschrieben. Sie trägt keine Siegelschicht und ihre Thermoverformbarkeit ist unzureichend.

In der EP 0494594 wird eine mehrschichtige Barrierefolie mit einer gefüllten Schicht offenbart, bei deren Herstellung keine Haftvermittler zwischen den einzelnen Schichten der Folie benötigt werden. Dadurch, daß die jeweils benachbarten Schichten der Folie zumindest zu einem Anteil aus dem Polymeren der Nachbarschicht aufgebaut sind, entsteht nach dem Extrudieren, dem Zusammenpressen und dem Abkühlen der jeweiligen Schichten der Folie eine Haftung zwischen den Schichten.

Auch diese bekannten Folien weisen den Nachteil auf, daß sie nicht ausreichend thermoverformbar sind.

Es stellte sich daher die Aufgabe, eine Mehrschichtenbarrierefolie mit papierähnlichem Charakter zu entwickeln, die insbesondere auf FFS-Maschinen gut thermoformbar und siegelbar ist und sich so insbesondere auf FFS-Machinen gut zu Mehrschichtenbarrierefolienverpackungen von leicht verderblichen Lebensmitteln verarbeiten läßt.

Gelöst wird diese Aufgabe durch die Bereitstellung einer asymmetrisch aufgebauten Folie, bestehend aus einer auf Polypropylen basierenden, gefüllten Schicht und mehreren ungefüllten Schichten, die dadurch gekennzeichnet ist, daß die gefüllte Schicht aus 40-75 Gew.-% anorganischem Füllstoff besteht und eine der beiden Außenschichten bildet,
die gefüllte Schicht eine Dicke von ≥ 40 µm aufweist,
die nicht gefüllten Schichten mindestens eine Barriereschicht und eine Siegelschicht und gegebenenfalls wenigstens eine Verbindungschicht enthalten und das Verhältnis der Gesamtdicke der ungefüllten Schichten zur Dicke der gefüllten Schicht, von 1:8 bis 1:1,2 beträgt.

Als anorganische Füllstoffe eignen sich Calciumcarbonat, Calciumsulfat, Talkum, Kaolin, Siliciumdioxid oder Titandioxid. In einer besonderen Ausführungsform enthält die gefüllte Schicht Calciumcarbonat. oder eine Mischung aus Calciumcarbonat und Titandioxid. Die Partikelgrösse der Füllstoffe liegt zwischen 1 und 10µm. Bevorzugt werden Partikelgrössen zwischen 2 und 6µm.

Das Matrixpolymer der gefüllten Schicht basiert auf Polypropylen. Dabei kann sowohl ein Homopolymer als auch ein Propylen/Ethylen Copolymer und eine Mischung der beiden verwendet werden. In einer bevorzugten Ausführungsform wird Polypropylen-Homopolymer mit einem Schmelzflussindex von 0.5 bis 7, in einer beonders bevorzugten Form von 1.5 bis 4.5 g/10min (2.16 kg, 230 °C, gemessen nach ASTM 1238) eingesetzt. In einer ebenfalls bevorzugten Ausführungsform wird ein Propylen/Ethylen Copolymeres mit einem Schmelzflußindex zwischen 0.5 und 5 g/10min (2.16 kg, 230 °C, gemessen nach ASTM 1238) verwendet.

Die Menge an Füllstoffen in der gefüllten Schicht beträgt zwischen 40 und 75 Gew.% bezogen auf die gefüllte Schicht. Die besonders bevorzugte Menge an Füllstoffen liegt zwischen 45 und 60 Gew.%.

Unter einer nichtgefüllten Schicht im Sinne dieser Erfindung wird auch eine Schicht mit anorganischen Additiven in üblichen Mengen (≤ 2 Gew.%) verstanden.

Die Schichtdicke der gefüllten Schicht liegt bei mindestens 40 µm, vorzugsweise bei 40 µm - 400µm. In einer besonders bevorzugten Ausführungsform beträgt sie 50-250 µm.

Die Barriereschicht sollte insbesondere bezüglich Wasserdampf, N₂, O₂ und CO₂ möglichst undurchlässig sein.

Je nachdem, ob die gefüllte Schicht und die Barriereschicht mit einer Haftvermittlerschicht verbunden werden sollen oder nicht, besteht die Barriereschicht entweder ausschließlich aus einem gassperrenden Polymer oder aus einem Gemisch aus einem gassperrenden Polymer und dem Matrixpolymer der gefüllten Schicht.

Wenn die Verbindung zwischen der gefüllten Schicht und der Barriereschicht nicht durch eine Haftvermittlerschicht erfolgen soll, muß die Barriereschicht als eine Komponente das Matrixpolymer der gefüllten Schicht enthalten. Die andere Komponente in der Barriereschicht kann z.B. Polyvinylidenchlorid (PVDC), Polyamid (PA) oder ein ähnliches Polymer mit guten gassperrenden Eigenschaften bevorzugt jedoch EVOH sein. Der Anteil der gassperrende Komponente in der Barriereschicht kann innerhalb weiter Grenzen variieren. Bevorzugt sollte er jedoch von 40-80 Gew.% bezogen auf die Barriereschicht betragen. Eine Barriereschicht aus 40 Gew.% EVOH und 60 Gew.% Matrixpolymer mit einem Schmelzflußindex von 1.2-8 g/10min (MFI nach ASTM 1238, 230 °C) hat sich als bevorzugt herausgestellt.

Falls die gefüllte Schicht und die Barriereschicht mit einer Haftvermittlerschicht verbunden werden sollen, wird die Barriereschicht vorzugsweise ausschließlich aus einem gassperrenden Polymeren, besonders bevorzugt aus EVOH hergestellt.

Bei beiden Varrianten soll das EVOH einen Ethylenanteil von 32 bis 45 mol% enthalten. Bevorzugt werden EVOH-Copolymere mit Ethylenanteilen von 38 bis 45 mol%. Besonders bevorzugt wird ein Ethylenanteil von 38 mol%. Der Schmelzflußindex des EVOH Copolymeren soll 1.2-8 g/10min (MFI nach ASTM 1238, 230 °C) betragen.

Die Schichtdicke der EVOH-Schicht sollte zwischen 3 und 12 µm, vorzugsweise zwischen 5 und 10 µm, liegen.

Als Siegelschichtmaterial werden Ethylen-Polymere verwendet. Dabei können sowohl Polyethylene niederer Dichte (LDPE) als auch EthylenvinylacetatCopolymere (EVA) verwendet werden. Bevorzugt wird ein LDPE mit einer Dichte im Bereich von 0.9225 and 0.9335 g/cm³. Der Schmelzflußindex der verwendeten Polymere sollte im Bereich von 0.5 bis 8.0 g/10min (190 °C, 2.16kg, ASTM 1238), vorzugsweise zwischen 2 und 5 g/10min liegen. In einer gleichermaßen bevorzugten Ausführungsform wird als Siegelschichtmaterial ein Ethylenvinylacetat-Copolymer mit einem Vinylacetatgehalt (VAC) von 3 bis 10 Gew.-% verwendet. Bevorzugt werden Polymere mit einem VAC-Gehalt zwischen 4 und 6 Gew.-%.

In einer speziellen Ausführungsform ist die Siegelschicht peelfähig. Dann besteht die Siegelschicht aus einer Mischung aus LDPE und Polybutylen (PB). PB wird mit dem LDPE in einem Bereich von 15 bis 30 Gew.-% gemischt, vorzugsweise im Bereich von 20 bis 28 Gew.-%. Der Schmelzflussindex des PB sollte im Bereich zwischen 0,3 und 2,0 g/10min (190 °C und 2,16 kg, ASTM 1238) liegen.

Die Dicke der Siegelschicht sollte 15 - 40 µm, vorzugswise 20 - 30 µm betragen.

Beim Einsatz von LDPE als Siegelschichtmaterial muß eine Haftvermittlerschicht zwischen der Barriereschicht und der Siegelschicht eingesetzt werden. Wird hingegen VAC als Siegelschichtmaterial verwendet, ist eine Haftvermittlerschicht vorteilhaft, jedoch nicht zwingend erforderlich.

Die Haftvermittlerschicht besteht vorzugsweise aus säuremodifizierten Polyolefinen, die literaturbekannt sind.

In einer speziellen Ausführungsform können die Haftvermittlerschichten auch übliche Kaschierklebstoffe sein, die mit einer Auftragsmenge zwischen 1,5 und 4 g/m² angewandt werden.

Die Dicken der Haftvermittlerschicht können in Bereich zwischen 2 und 6 µm liegen. Bevorzugt wird der Bereich zwischen 2 und 4 µm.

Enthält die Folie mehrere Haftvermittlerschichten, so können diese aus demselben oder unterschiedlichen, vorzugsweise jedoch aus unterschiedlichen Materialien bestehen.

In letzterem Fall wird z.B. ein Kaschierklebstoff zwischen der gefüllten Schicht aus Polypropylen und der EVOH-Schicht und ein säuremodifiziertes Polyolefin zwischen der EVOH-Schicht und der Siegelschicht benutzt.

Besonders wichtig für eine gute Thermoverformung und das papierähnliche Aussehen der Mehrschichtenbarrierefolie ist es, daß das Verhältnis der Gesamtdicke der ungefüllten Schichten zu der der gefüllten Schicht zwischen 1:8 und 1:1,2, besonders bevorzugt von 1:4 bis 1:2 beträgt.

Die beiden Aussenschichten der Folie können die üblichen Gleit- und Antiblockmittel wie z.B. Erucasäureamid, Polyalkylsiloxan wie z.B. Polydimethylsiloxan und Siliziumdioxid enthalten. Als weitere Additive können alle oder einzelne Schichten Stabilisatoren der bekannten Art enthalten.

Mit der erfindungsgemäßen Folienstruktur konnte eine Mehrschichtenbarrierefolie hergestellt werden, die nicht nur hervorragend thermoformbar ist, sondern auch noch einen papierähnlichen Charakter aufweist und sich auf FFS-Maschinen sehr gut thermoverformen läßt

Es war nicht zu erwarten, daß sich die erfindungsgemässen Mehrschichtenbarrierefolien auf FFS-Maschinen verarbeiten lassen. Die bisher bekannte Verarbeitungen von weißen, mit anorganischen Füllstoffen gefüllten Folien erfolgten ausschließlich auf Thermoformmaschinen mit langen Aufheizstrecken, die zwar die Folie verformen, aber weder in der Lage sind, die Packung zu füllen, noch zu versiegeln.

Ein weiterer Gegenstand der Erfindung ist daher die Verwendung der erfindungsgemäßen Mehrschichtenbarrierefolien auf FFS-Maschinen zur Verpackung von Lebensmitteln, insbesondere zur Verpackung von leicht verderblichen Produkten, wie z.B. Fleisch, Geflügel und Aufschnitt. Dafür muß die Folie ein besonders breites Temperaturfenster, bei dem die Thermoverformung stattfinden kann, aufweisen, da der Verpackungsprozeß auf FFS-Maschinen wegen eines Start-Stop Betriebes oftmals diskontinuierlich erfolgt.

Völlig überraschend war es auch, daß der ausgeprägt asymmetrische Folienaufbau der erfindungsgemäßen Folienstruktur zu hervorragender Thermoverformbarkeit, insbesondere Tiefzieheigenschaften führt.

Die mit der erfindungsgemäßen Folie hergestellten, thermoverformten, vorzugsweise tiefgezogenen, Mulden werden mit bekannten Deckelfolien verschlossen. Diese sind mehrschichtige Folien mit einer Schichtenfolgen wie zum Beispiel PET/PVDC//Klebstoff//LDPE oder PET//Klebstoff//PE/Haftvermittler/EVOH/Haftvermittler/PE.

Besonders eignen sich als Deckelfolien Folien mit dem Aufbau PET/SiOx//Klebstoff//LDPE. Diese biaxial orientierte Polyethylenterephtalatfolie wird in einer Vakuumkammer in einem Plasma mit SiOₓ beschichtet. In einer folgenden Verarbeitungsstufe wird auf diese Folie mittels Klebstoff eine vorgefertigte Polyethylenfolie kaschiert. Diese Folie zeichnet sich durch eine besonders gute Transparenz und eine hohe Knickbruchfestigkeit aus. Die damit versiegelte Packungsmulde hat eine besonders gute Gasbarriere.

Für den Fachmann war es weiterhin nicht naheliegend, daß bei Verwendung der erfindungsgemäßen Folienstruktur nach dem Form-, Füll- und Siegelprozeß der papierähnliche Charakter erhalten bleibt.

In dem Fall, daß keine Haftvermittlerschichten eingesetzt werden, ist die Folie vollständig recyclebar.

Die erfindungsgemäße Mehrschichtenbarrierefolie wird in üblichen Blasfoliencoextrusions- oder Gießfoliencoextrusionsverfahren hergestellt. Vorzugsweise wird das übliche 5-schichtige Blasfoliencoextrusionsverfahren verwendet. Vorteilhaft ist es, die Rohstoffe für die gefüllte Schicht als Compound zugegeben. Das auf Polypropylen basierende Matrixpolymer wird mittels Schmelzeextrusion geschmolzen. Während des Extrusionsprozeßes werden die anorganischen Füllstoffe zugegeben und anschliessend Polymer und Füllstoffe zu Granulat verarbeitet. Vorteilhaft kann es sein, das Polymer als Pulver zuzuführen. Das erzeugte Granulat wird im Blasfolienprozeß demjenigen Extruder zugeführt, der die dickste Schicht produziert. Während des Blasfolienprozeßes kann es günstig sein, die gefüllte Schicht als Aussenschicht zu produzieren.

In einem weiteren Herstellverfahren kann die erfindungsgemäße Folienstruktur produziert werden, indem zunächst die gefüllte Schicht als Monofolie im Giess- oder Blasfolienprozess hergestellt wird. Anschliessend kann diese Folie mit einer ebenfalls im Giess- oder Blasfolienprozess hergestellten Barrierefolie mit bekannten Verfahren wie Klebstoffkaschierung oder Sandwichkaschierung verbunden werden.

Sofern die Folie bedruckt werden soll, kann eine Aktivierung der Oberfläche der gefüllten Schicht mittels Corona- oder Flammvorbehandlung erfolgen. Auch kann die Folie im Plasma vorbehandelt werden. Eine Fluorvorbehandlung ist ebenfalls denkbar.

Die Gleit- und Antiblockadditive können dem Extruder sowohl direkt als auch über ein Masterbatch zugeführt werden.

Die relevanten Eigenschaften der Mehrschichtfolie gemäß der vorliegenden Erfindung werden unter praxisnahen Bedingungen auf einer Tiefziehmaschine der Firma Tiromat vom Typ Powerpak® getestet. Die erfindungsgemäße Folie wird als Muldenfolie verwendet. Ein Mass für die Qualität der Folie ist die Breite des Verarbeitungsfensters. Das Verarbeitungsfenster ist durch die Abpackgeschwindigkeit und die Thermoformtemperatur beschrieben. Angestrebt wird eine hohe Abpackgeschwindigkeit mit einem sehr breiten Bereich der Thermoformtemperatur. Die Thermoformtemperatur ist die an der Maschine eingestellte Temperatur der Heizzonen.

Die gemäß der Erfindung erhaltenen Folien werden subjektiv nach ihrem papierähnlichen Aussehen bewertet. Dabei wird das Erscheinungsbild und das Anfassverhalten (touch) der Folie bewertet.

### Beispiel 1:

Es wird eine Folie mit fünf Schichten im Blasfoliencoextrusionsverfahen hergestellt.
- Die Schichtenfolge ist: : ABCDE.
- Schicht A besteht aus:: 53 Gew. % eines Calciumcarbonats mit einer durchschnittlichen Teilchengrösse von 4,5 µm und 47 Gew.-% eines Homopolypropylens mit einem Schmelzflussindex von 2,1 g/10min
- Schicht B besteht aus:: 100 Gew.-% eines säuremodifizierten Ethylenmethacrylatcopolymeren mit einem Schmelzpunkt von 82 °C und einem Schmelzflußindex von 6,5 g/10min.
- Schicht C besteht aus:: 100 Gew.-% eines Ethylenvinylalkohlol Copolymers mit einem Ethylenanteil von 38 mol-% und einem Schmelzflussindex von 5,5 g/10min.
- Schicht D besteht aus:: 100 Gew.-% eines säuremodifizierten Polypropylens mit einem Schmelzflussindex von 3,5 g/10min.
- Schicht E besteht aus:: 75 Gew.-% eines Polyethylens mit einer Dichte von 0,9250 g/cm³ und einem Schmelzflussindex von 2,5 g/10min und
25 Gew.-% eines Polybutylens mit einem Schmelzflußindex von 1,8 g/10 min.

Die Schichtdicken sind:

| | |
|---|---|
| Schicht A: | 200 µm |
| Schicht B: | 5 µm |
| Schicht C: | 10 µm |
| Schicht D: | 5 µm |
| Schicht E: | 30 µm |

Die Gesamtschichtdicke beträgt 250 µm. Das Verhältnis der Dicke der ungefüllten Schichten zu der Dicke der gefüllten Schicht beträgt 1:4.

### Beispiel 2:

Im Beispiel zwei wird derselbe Schichtenaufbau wie in Beispiel 1 verwendet.
Abweichend sind die Schichtdicken

| | |
|---|---|
| Schicht A: | 61 µm |
| Schicht B: | 2 µm |
| Schicht C: | 10 µm |
| Schicht D: | 2 µm |
| Schicht E: | 25 µm |

Die Gesamtschichtdicke beträgt 100 µm. Das Verhältnis der Dicke der ungefüllten Schichten zu der Dicke der gefüllten Schicht beträgt 1:1,56.

### Vergleichsbeispiel 1

Die Folie hat denselben Schichtaufbau wie in Beispiel 1 beschrieben.
Die Schichtdicken sind jedoch abweichend:

| | |
|---|---|
| Schicht A: | 500 µm |
| Schicht B: | 5 µm |
| Schicht C: | 10 µm |
| Schicht D: | 5 µm |
| Schicht E: | 30 µm |

Die Gesamtschichtdicke beträgt 550 µm. Das Verhältnis der Dicke der ungefüllten Schichten zu der Dicke der gefüllten Schicht beträgt 1:10.

### Vergleichsbeispiel 2:

Die Mehrschichtenbarrierefolie des Vergleichsbeispiels 2 hat denselben Schichtenaufbau wie in Beipiel 1. Unterschiedlich sind die Schichtdicken.
Die Schichtdicken betragen:

| | |
|---|---|
| Schicht A: | 40 µm |
| Schicht B: | 2 µm |
| Schicht C: | 10 µm |
| Schicht D: | 2 µm |
| Schicht E: | 25 µm |

Die Gesamtschichtdicke beträgt 79 µm. Das Verhältnis der Dicke der ungefüllten zu der Dicke der gefüllten Schicht beträgt 1:1,02.

Die in den angegebenen Beispielen angegebenen Schmelzflußindices sind nach ASTM 1238 bestimmt.

| Folie nach | Formtemperaturbereich in °C | Folienaussehen |
|---|---|---|
| Beispiel 1 | *125 bis 145* | papierähnlich |
| *Vergleichsbeispiel 1* | *152 bis 156* | *papierähnlich* |
| Beispiel 2 | *115 bis 145* | papierähnlich |
| *Vergleichsbeispiel 2* | *115 bis 145* | *plastik* |

## Patentansprüche

1. Papierähnliche Mehrschichtenbarrierefolie, bestehend aus einer auf Polypropylen basierenden, gefüllten Schicht und mehreren ungefüllten Schichten, dadurch gekennzeichnet, daß
die gefüllte Schicht 40-75 Gew.-% bezogen auf diese Schicht anorganische Füllstoffe enthält
und eine der beiden Außenschichten bildet und eine Dicke von ≥ 40 µm aufweist,
die nicht gefüllten Schichten eine Barriereschicht und eine Siegelschicht und gegebenenfalls wenigstens eine Haftvermittlerschicht umfassen und
daß das Verhältnis der Gesamtdicke der ungefüllten Schichten zur Dicke der gefüllten Schicht, von 1:8 bis 1:1,2 beträgt.

2. Mehrschichtenbarrierefolie nach Anspruch 1, dadurch gekennzeichnet, daß die gefüllte Schicht Polypropylen, Propylen/Ethylen Copolymer oder eine Mischung der Polymeren als Polymermatrix aufweist.

3. Mehrschichtenbarrierefolie gemäß Anspruch 1 oder 2, dadurch gekennzeichnet, daß als anorganische Füllstoffe Calciumcarbonat, Calciumsulfat, Talkum, Titandioxid, Kaolin oder Siliciumdioxid eingesetzt werden.

4. Mehrschichtenbarrierefolie nach Ansprüchen 1-3, dadurch gekennzeichnet, daß die Barriereschicht aus Ethylenvinylalkoholcopolymer (EVOH), Polyvinyliden chlorid (PVDC) oder Polyamid (PA) besteht und über eine Haftvermittlerschicht mit der gefüllten Schicht verbunden ist.

5. Mehrschichtenbarrierefolie nach Ansprüchen 1-3, dadurch gekennzeichnet, daß die Barriereschicht aus einer Mischung des Matrixpolymeren mit EVOH oder PA besteht und ohne Haftvermittlerschicht mit der gefüllten Schicht verbunden ist.

6. Mehrschichtenbarrierefolie nach Anspruch 4 oder 5, dadurch gekennzeichnet, daß die Barriereschicht Ethylenvinylalkohol Copolymer enthält.

7. Mehrschichtenbarrierefolie nach Ansprüchen 1-6, dadurch gekennzeichnet, daß als Siegelschichtmaterial ein Ethylenpolymeres verwendet wird.

8. Mehrschichtenbarrierefolie nach Anspruch 7, dadurch gekennzeichnet, daß als Ethylenpolymeres Polyethylen niederer Dichte (LDPE), gegebenenfalls gemischt mit Polybutylen verwendet wird und die Siegelschicht über eine Haftvermittlerschicht mit der Barriereschicht verbunden ist.

9. Mehrschichtenbarrierefolie nach Anspruch 7, dadurch gekennzeichnet, daß als Ethylenpolymeres Ethylenvinylacetat Copolymer verwendet wird und die Siegelschicht ohne Haftvermittlerschicht mit der Barriereschicht verbunden ist.

10. Mehrschichtenbarrierefolie nach Anspruch 4 oder 8, dadurch gekennzeichnet, daß die Haftvermittlerschichten aus denselben oder vorzugsweise aus unterschiedlichen Materialien bestehen.

11. Mehrschichtenbarrierefolie nach Ansprüchen 1-10, dadurch gekennzeichnet, daß das Verhältnis der Gesamtdicke der ungefüllten Schichten zu der Dicke der gefüllten Schicht von 1:4 bis 1:2 beträgt.

12. Mehrschichtenbarrierefolie nach den Ansprüche 1-11, dadurch gekennzeichnet, daß die Mehrschichtenbarrierefolie nach einer Corona-, Flamm-, Fluor- oder Plasmavorbehandlung bedruckt, klebstoffkaschiert oder verklebt werden kann.

13. Verwendung der Mehrschichtenbarrierefolie nach den Ansprüchen 1-12, als Verpackungsfolie auf Form-, Füll- und Siegelmaschinen (FFS-Maschinen).

14. Verfahren zum Verpacken von verderblichen Lebensmitteln, insbesondere Fleisch und Geflügel, in einer Mehrschichtenbarrierefolie gemäß den Ansprüchen 1-12 auf einer FFS-Maschine durch Thermoverformung.

15. Verpackung bestehend aus einem muldenartigen Unterteil hergestellt aus einer tiefgezogenen Mehrschichtenbarrierefolie gemäß den Ansprüchen 1-12 und einer Deckelfolie.

16. Verpackung nach Anspruch 15, dadurch gekennzeichnet, daß die Deckelfolie aus einer mehrschichtigen Folie mit den Schichtenfolgen: Polyesterterephtalat (PET)/PVDC//Klebstoff//LDPE oder PET//Klebstoff// Polyethylen (PE)/Haftvermittler/EVOH/Haftvermittler/PE besteht.

17. Verpackung nach Anspruch 15, dadurch gekennzeichnet, daß die Deckelfolie aus einer Folie mit dem Aufbau PET/SiOx//Klebstoff//LDPE besteht.

## Claims

1. A paper-like multilayer barrier film consisting of a filled layer based on polypropylene and several unfilled layers, characterized in that
the filled layer being filled with 40-75 weight %, based on the total weight of the filled layer, of an inorganic filler and forming one of the two surface layers and having a thickness of ≥ 40 µm,
the unfilled layers comprising at least a barrier layer and a sealing layer and optionally at least one adhesive layer and
that the relation of the total thickness of the unfilled layers to the thickness of the filled layer is from 1:8 to 1:1,2.

2. A multilayer barrier film according to claim 1 characterized in that filled layer comprises polypropylene, propylene/ethylene copolymer or a mixture of these polymers as polymer matrix.

3. A multilayer barrier film according to claim 1 or 2 characterized in that calcium carbonate, calcium sulfate, talcum powder, titanium dioxide, kaoline or silicon dioxide are used as inorganic filler.

4. A multilayer barrier film according to claims 1-3 characterized in that the barrier layer comprises ethylene vinyl alcohol copolymer (EVOH), polyvinylidene chloride (PVDC) or polyamide (PA) and is bonded to the filled layer via at least one adhesive layer.

5. A multilayer barrier film according to claims 1-3 characterized in that the barrier layer comprises a mixture of the matrix polymer with EVOH or PA and is bonded to the filled layer without any adhesive layer.

6. A multilayer barrier film according to claim 4 or 5 characterized in that the barrier layer consists of or comprises EVOH.

7. A multilayer barrier film according to claim 1-6 characterized in that a ethylene polymer is used as material for the sealing layer.

8. A multilayer barrier film according to claim 7 characterized in that as ethylene polymer polyethylene of low density (LDPE), optionally mixed with polybutylene, is used and the sealing layer is bonded to the barrier layer via a adhesive layer.

9. A multilayer barrier film according to claim 7 characterized in that as ethylene polymer ethylene vinyl acetate copolymer is used and the sealing layer is bonded to the barrier layer without any adhesive layer.

10. A multilayer barrier film according to claim 4 or 8 characterized in that adhesive layers consist of the same or, preferably, different materials.

11. A multilayer barrier film according to claim 1-10 characterized in that the relation of the thickness of the unfilled layers to the thickness of the filled layer is between 1:4 and 1:2.

12. A multilayer barrier film according to claims 1-11 characterized in that it is printed, laminated by adhesives or glued after a corona-, flame-, fluorine or plasma pretreatment.

13. Use of the multilayer barrier film according to claims 1-12 as packaging material, preferably on form-, fill- and seal-machines (FFS-machines).

14. Packaging of perishable kinds of food, especially meat and poultry in a multilayer barrier film according to claims 1-12 on a FFS-machine by thermo-forming.

15. Packages consisting of a tray-like lower part produced from a multilayer barrier film according to claims 1-12 and sealed by a lidding film.

16. Packaging according to claim 15 characterized in that the lidding film consists of a multilayer film with the following sequence of layers: polyester terephthalate (PET)/PVDC/adhesive /LDPE or PET/adhesive/polyethlene (PE) /adhesive /EVOH/adhesive /PE.

17. Packaging according to claim 15 characterized in that the lidding film is composed of the layers PET/SiOx/adhesive/LDPE.

## Revendications

1. Feuille de barrière multicouche analogue à du papier, constituée d'une couche chargée, à base de polypropylène, et de plusieurs couches non chargées, caractérisée en ce que la couche chargée contient 40 à 75% en poids par rapport à cette couche de charges inorganiques, et forme une des deux couches externes et présente une épaisseur de ≥ 40 µm, en ce que les couches non chargées comportent une couche de barrière et une couche de scellage et éventuellement une couche d'agent adhérisant et en ce que le rapport entre l'épaisseur globale des couches non chargées et l'épaisseur de la couche chargée est de 1/8 à 1/1,2.

2. Feuille de barrière multicouche suivant la revendication 1, caractérisée en ce que la couche chargée présente, comme matrice polymère, du polypropylène, un copolymère de propylène/éthyléne ou un mélange des polymères.

3. Feuille de barrière multicouche suivant l'une des revendications 1 et 2, caractérisée en ce que, comme charges inorganiques, on met en oeuvre du carbonate de calcium, du sulfate de calcium, du talc, du dioxyde de titane, du kaolin ou du dioxyde de silicium.

4. Feuille de barrière multicouche suivant l'une des revendications 1 à 3, caractérisée en ce que la couche de barrière est constituée de copolymère d'éthylène et d'alcool vinylique (EVOH), de chlorure de polyvinylidène (PVDC) et de polyamide (PA) et en ce qu'elle est réunie à la couche chargée par l'intermédiaire d'une couche d'agent adhérisant.

5. Feuille de barrière multicouche suivant l'une des revendications 1 à 3, caractérisée en ce que la couche de barrière est constituée d'un mélange du polymère de matrice avec EVOH ou PA et en ce qu'elle est reliée à la couche chargée sans couche d'agent adhérisant.

6. Feuille de barrière multicouche suivant l'une des revendications 4 et 5, caractérisée en ce que la couche de barrière contient un copolymère d'éthylène et d'alcool vinylique.

7. Feuille de barrière multicouche suivant l'une des revendications 1 à 6, caractérisée en ce que, comme matière de couche de scellage, on utilise un polymère d'éthylène.

8. Feuille de barrière multicouche suivant la revendication 7, caractérisée en ce que, comme polymère d'éthylène, on utilise du polyéthylène de faible densité (LDPE), éventuellement en mélange avec du polybutylène, et en ce que la couche de scellage est reliée à la couche de barrière par l'intermédiaire d'une couche d'agent adhérisant.

9. Feuille de barrière multicouche suivant la revendication 7, caractérisée en ce que, comme polymère d'éthylène, on utilise un copolymère d'éthylène et d'acétate de vinyle et en ce que la couche de scellage est reliée à la couche de barrière sans couche d'agent adhérisant.

10. Feuille de barrière multicouche suivant l'une des revendications 4 et 8, caractérisée en ce que les couches d'agent adhérisant sont constituées des mêmes matières ou de préférence de matières différentes.

11. Feuille de barrière multicouche suivant l'une des revendications 1 à 10, caractérisée en ce que le rapport entre l'épaisseur globale des couches non chargées et l'épaisseur de la couche chargée est de 1/4 à 1/2.

12. Feuille de barrière multicouche suivant l'une des revendications 1 à 11, caractérisée en ce que la feuille de barrière multicouche peut, après un prétraitement à effet de couronne, à la flamme, au fluor ou au plasma, être imprimée, revêtue de matière adhésive ou collée.

13. Utilisation de la feuille de barrière multicouche suivant l'une des revendications 1 à 12, comme feuille d'emballage sur des machines de façonnage, de remplissage et de scellage (machines FFS).

14. Procédé d'emballage d'aliments périssables, en particulier de viande et de volaille, dans une feuille de barrière multicouche suivant l'une des revendications 1 à 12 sur une machine FFS, par thermoformage.

15. Emballage constitué d'une partie inférieure en forme de cuvette, fabriqué à partir d'une feuille de barrière multicouche suivant l'une des revendications 1 à 12, emboutie et d'une feuille de recouvrement.

16. Emballage suivant la revendication 15, caractérisé en ce que la feuille de recouvrement est constituée d'une feuille multicouche avec les successions de couches : téréphtalate de polyester (PET)/PVDC//adhésif//LDPE ou PET//adhésif//polyéthylène (PE)/agent adhérisant/EVOH/agent adhérisant/PE.

17. Emballage suivant la revendication 15, caractérisé en ce que la feuille de recouvrement est constituée d'une feuille ayant la structure PET/SiOx//adhésif//LDPE.
